(19) Europäisches Patentamt
European Patent Office
Office européen des brevets

(11) Veröffentlichungsnummer : **0 043 792**
**B1**

(12) # EUROPÄISCHE PATENTSCHRIFT

(45) Veröffentlichungstag der Patentschrift : **05.03.86**

(21) Anmeldenummer : **81810201.4**

(22) Anmeldetag : **27.05.81**

(51) Int. Cl.⁴ : **D 21 H 1/46**, D 21 H 3/80// C09B43/10, C09B45/48

(54) **Färben von Papier.**

(30) Priorität : **03.06.80 CH 4287/80**

(43) Veröffentlichungstag der Anmeldung : **13.01.82 Patentblatt 82/02**

(45) Bekanntmachung des Hinweises auf die Patenterteilung : **05.03.86 Patentblatt 86/10**

(84) Benannte Vertragsstaaten : **CH DE FR GB LI SE**

(56) Entgegenhaltungen :
**CH-A- 415 296**
**CH-A- 431 272**
**DE-A- 2 651 369**
**FR-A- 2 438 673**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Käser, Adolf, Dr.**
**Spitzackerstrasse 118**
**CH-4103 Bottmingen (CH)**

(74) Vertreter : **Zumstein, Fritz jun., Dr. et al**
**Dr. F. Zumstein sen. Dr. E. Assmann Dr. R. Koenigsberger Dipl.-Ing. F. Klingseisen Dr. F. Zumstein jun.**
**Bräuhausstrasse 4**
**D-8000 München 2 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 043 792 B1

**Beschreibung**

Die Färbungen von Papier mit synthetischen organischen Farbstoffen aus dem Bereich blauer Farbtöne zeigen vielfach unbefriedigende Echtheiten, z. B. Nassechtheiten mit Wasser und Wasser/Alkohol sowie Lichtechtheiten. Es stellte sich daher die Aufgabe Farbstoffe zu finden, welche zum Färben von Papier geeignet sind, die blaue Nuance haben, und die zudem die genannten Mängel nicht aufweisen. Es wurde gefunden, dass die Farbstoffe der Formel (1) diesen Anforderungen genügen.

Die Erfindung betrifft daher die Verwendung von Azofarbstoffen

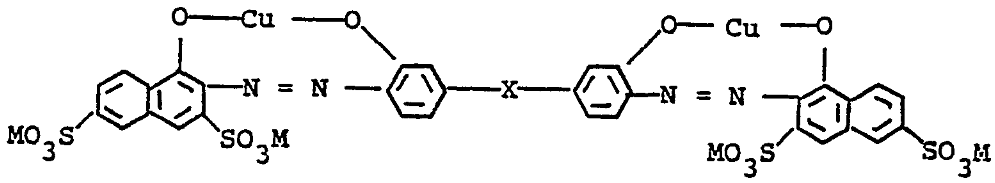

(1)

Azoxy- oder Azogruppe, worin X die Wasserstoff, ein Alkalimetallatom, und M Diäthanolamin oder Triäthanolamin bedeutet, zum Färben von Papier.

Die Farbstoffe der Formel (1) können hergestellt werden, indem man eine Nitromonoazoverbindung der Formel

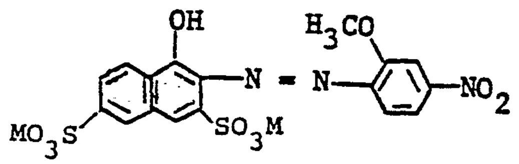

(2)

worin M die unter Formel (1) angegebene Bedeutung hat, zu den entsprechenden Azoxy- bzw. Azoverbindungen reduziert, and diese unter solchen Bedingungen mit kupferabgebenden Mitteln behandelt, dass die in ortho-Stellung zur Azobrücke befindliche Methoxygruppe gespalten wird. Statt in letzter Stufe zu kupfern, kann man auch von dem Kupferkomplex einer Nitromonoazoverbindung der Formel (2) ausgehen, und diesen wie oben beschrieben reduzieren. Als Reduktionsmittel werden vorzugsweise reduzierende Zucker, z. B. D-Glucose, in wässrigen alkalischen Lösungen verwendet. Die Lösung kann beispielsweise mittels eines Alkalimetallhydroxyds, z. B. Natriumhydroxyd oder Lithiumhydroxyd, alkalisch gemacht werden.

Die Reduktion wird dadurch ausgeführt, dass man eine wässrige Lösung des reduzierenden Zuckers (vorzugsweise zwischen 0,5 und 1,5 Mol je Nitroverbindung) zu einer wässrigen Lösung der Nitromonoazoverbindung, welche überschüssiges Alkalimetallhydroxyd (bis zu 10 Mol je Mol Nitroverbindung) enthält, bei Temperaturen zwischen 50 und 100 °C zugibt. Die Geschwindigkeit der Reduktion kann dadurch unter Kontrolle gehalten werden, dass man die reduzierende Zuckerlösung mit einer solchen Geschwindigkeit zugibt, so dass der Zucker kontinuierlich reagiert und seine Konzentration in der Reaktionsmischung nicht ansteigt. Nach einer anderen Verfahrensweise kann die Zuckerlösung so rasch wie möglich zugegeben werden, wobei die Reduktion durch Zusatz einer Säure abgebrochen wird, wenn festgestellt worden ist, dass sie beendet ist.

Die Reduktion einer Nitromonoazoverbindung der Formel (2) zu einer entsprechenden Azoxy- bzw. Azoverbindung kann auch mit Formaldehyd ausgeführt werden.

Die durch die Reduktion erhaltene Farbstofflösung kann als solche verwendet werden. Es ist aber auch möglich, den Farbstoff durch herkömmliche Verfahren zu isolieren und ihn dann wieder in Wasser aufzulösen. Zur Erzielung einer maximalen Löslichkeit in Wasser wird es bevorzugt, den Farbstoff zumindest teilweise in ein Lithium- oder Alkanolaminsalz, z. B. ein Diäthanolamin- oder Triäthanolaminsalz zu überführen. Den Farbstofflösungen kann Harnstoff zugegeben werden.

Die Nitromonoazoverbindungen der Formel (2) werden hergestellt durch Diazotierung von 2-Amino-5-nitroanisol und Kupplung auf.

Die Diazotierung der Diazokomponenten erfolgt in der Regel durch Einwirkung salpetriger Säure in wässrig-mineralsaurer Lösung bei tiefer Temperatur, die Kupplung auf die Kupplungskomponenten bei schwach sauren, neutralen bis schwach alkalischen pH-Werten.

Als kupferabgebendes Mittel kann man Salze verwenden, welche das Kupfer als Kation enthalten, z. B. Kupfersulfat, Kupferchlorid oder Kupferacetat. In manchen Fällen ist die Verwendung komplexer Kupferverbindungen von Vorteil, z. B. in Form von Kupfer-Ammin-Komplexen, wie Kupfertetramminsulfate aus Kupfersulfat und Ammoniak, Pyridin oder Monoäthanolamin, oder in Form von Verbindungen,

welche das Kupfer komplex gebunden enthalten, z. B. komplexer Kupferverbindungen der Alkalimetallsalze aliphatischer Aminocarbonsäuren oder Hydroxycarbonsäuren, wie des Glykokolls, der Milchsäure und vor allem der Weinsäure, wie Natriumkupfertartrat.

Die Behandlung mit dem kupferabgebenden Mittel erfolgt in wässrigem oder organisch-wässrigem Medium, z. B. bei Raumtemperatur, falls leicht metallisierbare Ausgangsverbindungen vorliegen oder durch Erwärmen auf Temperaturen zwischen 50 und 120 °C im offenen Gefäss, z. B. unter Rückflusskühlung oder gegebenenfalls im geschlossenen Gefäss unter Druck, wobei die pH-Verhältnisse durch die Art des gewählten Metallisierungsverfahrens gegeben sind ; z. B. eine saure Kupferung mit Kupfersulfat, eine alkalische Kupferung mit Kupfertetramminsulfat.

Gewünschtenfalls können bei der Metallisierung auch Lösungsmittel, wie z. B. Alkohol, Dimethylformamid, usw. zugesetzt werden.

Die Farbstoffe der Formel (1) können in fester oder flüssiger Form zum Färben von Papier eingesetzt werden.

Als Pulver oder Granulat werden die Farbstoffe insbesondere bei der diskontinuierlichen Massefärbung verwendet, wobei der Farbstoff chargenweise im Pulper, Holländer oder in der Mischbütte zugesetzt wird. Dabei werden die Farbstoffe vorzugsweise als Farbstoffzubereitungen verwendet, die Coupagemittel z. B. Harnstoff als Lösungsvermittler, Dextrine, Glaubersalz, Kochsalz sowie Dispergatoren, Entstäubungsmittel und Sequestriermittel, wie Tetranatriumpyrophosphat, enthalten können.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Holländer oder an irgendeinem anderen geeigneten Punkt bei dem Papierherstellungssystem einzumessen.

Konzentrierte wässrige Lösungen von Farbstoffen der Formel (1) können hergestellt werden, indem man die bei der Herstellung des Farbstoffes anfallende Farbstoffsuspension filtriert und die nötige Menge Wasser und gegebenenfalls weitere Zusätze zugibt, oder indem man den isolierten Farbstoff in Salzsäure anschlämmt, erneut filtriert und den Filterkuchen mit Lithiumhydroxid und der nötigen Menge Wasser vermischt. Eine derartige Farbstofflösung eignet sich zum Färben einer Papierpulpe in Anwesenheit von Kolophonium und Alaunschlichte.

Die Lithiumsalze von Farbstoffen der Formel (1) können auch direkt gewonnen werden, wenn die Reduktion der Nitromonoazoverbindungen der Formel (2) mit Glucose in Gegenwart von Lithiumhydroxid statt Natriumhydroxid vorgenommen wird, und das ungekupferte Zwischenprodukt durch Zugabe von Lithiumchlorid statt Kochsalz ausgesalzen wird.

Die Farbstoffe der Formel (1) zeichnen sich durch blaue Farbtöne, eine hohe Substantivität, gute Lichtechtheit und Abwasserechtheit aus.

Die wässrigen Konzentrate, die bei Lagerungstemperaturen bis zu − 5 °C stabil sind, eignen sich zum Färben von Papier, auf welchem sie mit oder ohne Verwendung einer Schlichte attraktive blaue Farbtöne ergeben.

Farbstoffe der Formel (1) sind aus den Deutschen Patenschriften 592.555, 636.358 und 639.728 bekannt, jedoch wurde deren Verwendung zum Färben von Papier nicht in Betracht gezogen. Aus der DE-A-26 51 369 sind ungekupferte analoge Azofarbstoffe die auxochrome Gruppen enthalten und zum Färben von Papier verwendet werden können, bekannt. Die Farbstärke dieser Farbstoffe (molare Extinktionskoeffizient ε λ max.) liegt in der Grössenordnung von 75'000. Aus der CH-A 415 296 sind strukturähnliche auxochrome Gruppen enthaltende Azofarbstoffe bekannt, die jedoch gekupfert sind. Diese Farbstoffe weisen eine Farbstärke in der Grössenordnung von 26 000 auf.

In den nachfolgenden Beispielen bedeuten die Teile Gewichtsteile, und die Temperaturen sind in Celsiusgraden angegeben.

## Beispiel 1

Es werden 16,9 Teile 2-Amino-5-nitroanisol diazotiert und bei einem pH-Wert von 8 bis 9 mit 30,4 Teilen 1-Naphthol-3,6-disulfonsäure gekuppelt. Die Suspension des entstandenen Monoazofarbstoffes wird mit 132 Teilen 30 %iger Natronlauge versetzt und auf 60° erwärmt, dabei entsteht eine Lösung. Dann werden 14,9 Teile Glucose, gelöst in 75 Teilen Wasser, während einer Stunde bei 60° unter Rühren eintropfen gelassen. Sobald chromatographisch kein Ausgangsmaterial mehr nachzuweisen ist, wird der Farbstoff aus der heissen Lösung durch Zusatz von 125 Teilen Kochsalz gefällt. Die feuchte Paste des isolierten blauen Farbstoffes wird in 400 Teilen Wasser angeschlämmt und mit 68 Teilen 24 %igem Ammoniak und etwas Emulgator versetzt. Bei 60° wird eine Lösung von 24,9 Teilen Kupfersulfat in 150 Teilen Wasser während 30 Minuten zutropfen gelassen, und anschliessend wird die Reaktionslösung während drei Stunden unter intensivem Rückfluss gerührt. Der Kupferkomplexfarbstoff wird heiss mit 160 Teilen Kochsalz ausgesalzen, filtriert, mit 20 %iger Kochsalzlösung gewaschen und anschliessend getrocknet.

Der Farbstoff färbt Papier leicht rotstichig blau und zeichnet sich durch gute Echtheiten, insbesondere eine gute Lichtechtheit, aus.

Der wie oben beschrieben isolierte Filterkuchen lässt sich auch auf folgende Weise aufarbeiten :

a) Der Farbstoff wird mit Salzsäure angeschlämmt und erneut filtriert. Eine konzentrierte wässrige Lösung des Farbstoffes wird dadurch hergestellt, dass der Filterkuchen mit bis zu 5 Teilen Lithiumhydroxyd-monohydrat und der nötigen Menge Wasser gemischt wird, so dass 500 Teile einer Lösung erhalten werden, die nach einer Filtration zur Entfernung von Fremdstoffspuren mindestens mehrere Monate gelagert werden kann. Die Farbstofflösung eignet sich zum Färben von Papierpulpe in Anwesenheit von Kolophonium und Alaunschlichte, wobei ein attraktiver blauer Farbton erhalten wird.

b) Der Farbstoff wird mit Salzsäure angeschlämmt und erneut filtriert. Eine konzentrierte wässrige Lösung des Farbstoffes wird dadurch hergestellt, dass der Filterkuchen mit bis zu 20 Teilen Diäthanolamin und der nötigen Menge Wasser gemischt wird, so dass 500 Teile eine, über mehrere Monate bei temperaturen von − 10 °C bis + 40 °C stabiler, konzentrierter Lösung des Farbstoffes als Diäthanolaminsalz erhalten werden. Diese Lösung ist mit Wasser in jedem Verhältnis mischbar und eignet sich nach dem Verdünnen mit Wasser zum Färben von Papier.

## Färbebeispiele

### Beispiel 1 - Druckpapier

800 kg Sulfatcellulose, gebleicht und 200 kg Sulfitcellulose gebleicht, werden in der angelieferten Form in einem Pulper, in dem 14 cbm Fabrikationswasser vorgelegt sind, eingetragen und bis zur Stippenfreiheit aufgeschlagen. Der Aufschlagvorgang benötigt 30 Minuten. Anschliessend wird der aufgeschlagene Zellstoff in eine Ableerbütte überführt. Aus der Ableerbütte wird die Zellstoffsuspension mit Stoffmühlen auf einen Mahlgrad von 25 °SR (nach Schopper-Riegler) gemahlen und gelangt anschliessend in eine Mischbütte. In der Mischbütte erfolgen als weitere Zusätze 250 kg Kaolin la (als Füllstoff) sowie 1 % Farbstoff berechnet auf absolut trockene Faser (in Form einer wässrigen Lösung von 20 g/l). Nach 15 Minuten Aufziehzeit werden 2 % Harzleim (absolut trocken) sowie nach 10 Minuten 4 % Alaun (beides berechnet auf absolut trockene Cellulose) zugefügt. pH der Stoffsuspension : 5,3. Dieser Papierstoff gelangt über den in dieser Industrie üblichen Prozessablauf auf die Papiermaschine.

### Beispiel 2 - Tissuepapier

1 000 kg Sulfatcellulose, gebleicht werden in der angelieferten Form in einen Pulper, in dem 14 $m^3$ Fabrikationswasser vorgelegt sind, eingetragen und bis zur Stippenfreiheit aufgeschlagen. Der Aufschlagvorgang benötigt 30 Minuten.

Anschliessend wird der aufgeschlagene Stoff in eine Ableerbütte überführt. Aus der Ableerbütte wird der Zellstoff mit Stoffmühlen auf einen Mahlgrad von 25 °SR gemahlen und gelangt anschliessend in eine Mischbütte. In der Mischbütte erfolgt die Zugabe von 1 % Farbstoff berechnet auf absolut trockene Faser, in Form einer wässrigen Lösung von 20 g/l. pH der Stoffsuspension : 7. Nach 15 Minuten Aufziehzeit gelangt dieser Papierstoff über den in dieser Industrie üblichen Prozessablauf auf die Papiermaschine.

### Beispiel 3 - Sizepress Applikation

In 1 000 l einer 10 %igen anionischen Stärkelösung werden 5 kg Farbstoff gelöst und mittels Leimpresse appliziert. Der Auftrag obiger Lösung beträgt 1,5 g/$m^2$ absolut trocken je Seite.

**Patentanspruch**

Verwendung von Farbstoffen der Formel

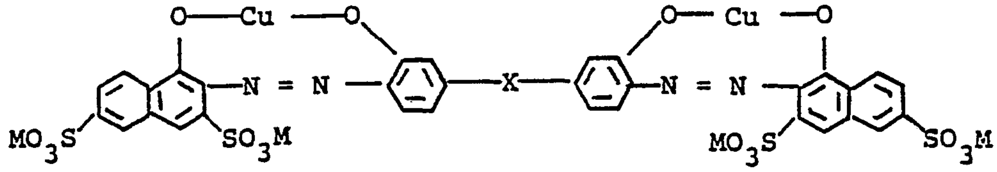

(1)

worin X die Azoxy- oder Azogruppe, und M Wasserstoff, ein Alkalimetallatom, Diäthanolamin oder Triäthanolamin bedeutet zum Färben von Papier.

**Claim**

Use of a dye of the formula

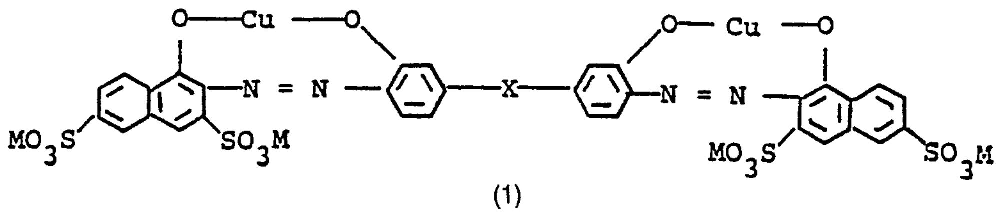

(1)

wherein X is the azoxy or azo group and M is hydrogen, and alkali metal atom, diethanolamine or triethanolamine, for dyeing paper.

**Revendication**

utilisation de colorants de formule

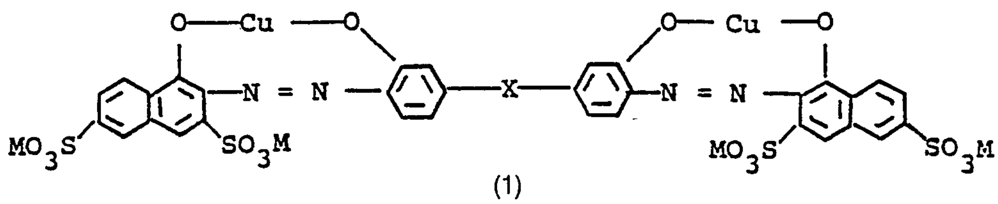

(1)

dans laquelle X représente un groupe azo ou azoxy, et M représente un atome d'hydrogène, un atome de métal alcalin, la diéthanolamine ou la triéthanolamine, pour la teinture de papier.